# FASCICULE DE BREVET EUROPEEN

(11) **EP 2 892 674 B1**
(45) Date de publication et mention de la délivrance du brevet: **12.10.2016**
(21) Numéro de dépôt: 13747472.2
(22) Date de dépôt: 22.07.2013
(51) Int. Cl.: B23K 9/095, B23K 9/12

(54) **DISPOSITIF DE SOUDAGE À L'ARC AVEC SÉLECTION AUTOMATIQUE DU RÉGIME DE TRANSFERT DE MÉTAL**
LICHTBOGENSCHWEISSVORRICHTUNG MIT AUTOMATISCHER AUSWAHL DER METALLÜBERTRAGUNG
ARC WELDING DEVICE WITH AUTOMATIC METAL TRANSFER MODE SELECTION

(30) Priorité: 05.09.2012 FR 1258275
(43) Date de publication de la demande: 15.07.2015
(73) Titulaire: Air Liquide Welding France, 75007 Paris (FR)
(72) Inventeur: PLOTTIER, Gérard, F-95460 Ezanville (FR); CHEVALIER, Richard, F-95300 Pontoise (FR); JANUARD, Fabien, F-95220 Herblay (FR)
(74) Mandataire: Pittis, Olivier
(86) Numéro de dépôt international: PCT/FR2013/051757
(87) Numéro de publication internationale: WO 2014/037637

(56) Documents cités:
- EP-A2- 1 052 051
- WO-A1-2008/151393
- WO-A1-2011/157286

## Description

L'invention porte sur un dispositif de soudage à l'arc avec fil métallique fusible permettant à un opérateur de régler la vitesse de fil et de sélectionner automatiquement, en fonction du réglage de vitesse de fil, un type de régime de transfert de métal. L'invention concerne également un procédé de soudage d'au moins une pièce métallique dont les performances sont améliorées et la mise en oeuvre facilitée grâce au dispositif selon l'invention.

Les procédés de soudage à l'arc avec fil métallique fusible sous flux gazeux, également appelés MIG pour « *Metal Inert Gas* », ou MAG, pour *« Metal Active Gas* », reposent sur l'utilisation d'un arc électrique établi entre l'extrémité d'un fil métallique fusible, servant d'électrode fusible, et les pièces métalliques à souder. La chaleur de l'arc électrique permet de fondre le métal constitutif des pièces à souder ainsi que le métal constitutif du fil fusible, ce qui génère un bain de soudure formé du métal constitutif fondu des pièces à souder et du métal du fil fusible fondu et transféré dans l'arc électrique, vers le bain de soudure.

Un procédé de soudage à l'arc est généralement opéré avec une torche de soudage positionnée en regard des pièces métalliques à souder. La torche supporte en son extrémité la partie terminale du fil métallique fusible. La torche de soudage est aussi munie d'une buse distribuant un flux de gaz de protection au-dessus du bain de soudure afin de la protéger de l'atmosphère environnante.

La torche est reliée électriquement à un poste de soudage à l'arc, comprenant habituellement au moins une source de gaz de protection alimentant la torche, un générateur de courant alimentant le fil fusible en courant électrique et un dévidoir de fil permettant de distribuer le fil en sortie de la torche, en direction du bain de soudure, à une vitesse de fil contrôlée.

Un poste de soudage à l'arc comprend en général des moyens de sélection des paramètres de soudage, notamment tension d'arc, vitesse de fil, i. e. la vitesse à laquelle le fil est distribué, courant lisse ou pulsé...

Les paramètres de soudage sélectionnés résultent en un type de régime de transfert de métal donné. Plus précisément, ces paramètres déterminent l'énergie de soudage, qui détermine la forme prise par l'extrémité du fil lorsqu'elle est fondue par le passage du courant, et la façon dont le métal constitutif du fil fondu est transféré vers le bain de soudure, i.e. le régime de transfert.

Actuellement, les générateurs de courant électroniques, tels les générateurs à onduleurs et/ou à hacheurs, sont largement employés en soudage MIG ou MAG car ils permettent un contrôle précis du courant d'arc. En particulier, ils offrent la possibilité d'imposer au courant des formes particulières en fonction du temps. Il est alors possible de contrôler le détachement de la goutte au bout du fil, afin de travailler dans un régime de transfert adapté au procédé de soudage à mettre en oeuvre, par exemple pour minimiser les projections de métal fondu.

Typiquement, les dispositifs de soudage sont équipés de générateurs électroniques dans lesquels les paramètres de soudage, notamment intensité du courant, i. e. courant de soudage, tension d'arc, vitesse de fil, sont programmés pour évoluer ensemble et en fonction de la vitesse de fil selon une loi prédéfinie, appelée synergie. En général, ces synergies sont préalablement établies par les constructeurs et mémorisées dans les postes de soudage.

Habituellement, avant de débuter l'opération de soudage, l'opérateur sélectionne une synergie adaptée au procédé de soudage souhaité, défini par le type de matériau à souder, le type de fil fusible, le type de gaz, le type d'assemblage ou de joint, la position de soudage, le type de régime de transfert de métal.... Une fois la synergie sélectionnée, l'opérateur règle la vitesse de fil et ajuste éventuellement la longueur d'arc. Le générateur de courant ajuste ensuite automatiquement les paramètres de soudage et l'opération de soudage commence.

Un tel dispositif de soudage est connu du document EP-A-1052051. Toutefois, ce mode opératoire n'est pas pleinement satisfaisant.

En effet, le type de transfert de métal est sélectionné à partir du poste de soudage lors du choix de la synergie de départ.

Or, il est fréquent qu'un opérateur soudant un assemblage avec un type de régime de transfert donné souhaite augmenter la vitesse de dévidage du fil, i. e. la vitesse de fusion du fil, de manière à augmenter la productivité ou le taux de dépôt.

Comme la vitesse de fil, l'intensité et la tension d'arc sont en équilibre. Une augmentation de la vitesse de fil implique une augmentation du courant, ce qui engendre inévitablement, au-delà d'une certaine vitesse de fil, un changement de régime de transfert. L'opérateur peut ainsi être amené à sélectionner involontairement un régime de transfert inadapté au procédé de soudage opéré, par exemple un régime projetant ou un régime trop énergétique par rapport à l'épaisseur à souder ou difficilement maniable dans la position de soudage souhaitée.

L'opérateur est alors obligé de sélectionner sur le poste de soudage une autre synergie lui permettant d'obtenir des résultats de soudage satisfaisants avec le nouveau réglage de vitesse de fil. Il s'ensuit des opérations de réglage qui deviennent fastidieuses et nécessitent plusieurs séquences de réglages et d'essais de soudage successives.

Le problème à résoudre est dès lors de pallier tout ou partie des problèmes susmentionnés, en particulier de proposer un poste de soudage permettant de minimiser grandement, voire d'éliminer, les risques pour un opérateur de sélectionner un régime de transfert de métal inadapté au procédé de soudage qu'il souhaite mettre en oeuvre.

Dit autrement, la présente invention se propose de faciliter le réglage par un opérateur d'un poste de soudage pour mettre en oeuvre un procédé de soudage à l'arc selon un régime de transfert de métal adapté, et ce quelle que soit la vitesse de fil sélectionnée.

La solution de l'invention est alors un dispositif de soudage à l'arc avec fil métallique fusible comprenant des moyens de réglage d'une vitesse de fil Vf et des moyens de sélection d'un type de régime de transfert de métal, les moyens de réglage de vitesse de fil Vf étant manoeuvrables manuellement ou digitalement par un opérateur, caractérisé en ce que les moyens de sélection d'un type de régime de transfert de métal coopèrent avec les moyens de réglage de la vitesse de fil Vf de manière à permettre à l'opérateur de régler la vitesse de fil Vf par manoeuvre desdits moyens de réglage de vitesse de fil Vf et de sélectionner automatiquement, en fonction dudit réglage de vitesse de fil Vf, un type de régime de transfert de métal.

Par ailleurs, selon le mode de réalisation considéré, l'invention peut comprendre l'une ou plusieurs des caractéristiques suivantes :
- le type de régime de transfert de métal est sélectionné dans un groupe formé d'au moins un régime de transfert par court-circuit forcé et un régime de transfert par pulvérisation axiale.
- le dispositif de soudage comprend des moyens de mémorisation pour mémoriser au moins un type de régime de transfert de métal sélectionnable par les moyens de sélection d'un type de régime de transfert de métal.
- lesdits moyens de mémorisation permettent en outre de mémoriser au moins une première valeur prédéterminée de vitesse de fil VfA et une deuxième valeur prédéterminée de vitesse de fil VfB, la première valeur VfA étant inférieure à la deuxième valeur VfB.
- le dispositif de soudage comprend en outre des moyens de comparaison de la vitesse de fil Vf avec lesdites première et deuxième valeurs prédéterminées de vitesse de fil VfA, VfB.
- les moyens de sélection du type de régime de transfert de métal coopèrent avec les moyens de mémorisation et de comparaison de manière à ce que l'opérateur sélectionne automatiquement au moins :
   - un premier type de régime de transfert lorsque Vf est inférieure ou égale à la première valeur prédéterminée VfA, et
   - un deuxième type de régime de transfert de métal lorsque (Vf) est supérieure ou égale à la deuxième valeur prédéterminée VfB.
- le premier type de régime de transfert de métal est un régime de transfert par court-circuit forcé et le deuxième type de régime de transfert de métal est un régime de transfert par pulvérisation axiale.
- les moyens de mémorisation coopèrent avec des moyens de sélection des première et/ou deuxième valeurs prédéterminées VfA, VfB pour permettre, après sélection, une mémorisation automatique des valeurs desdites première et deuxième valeurs prédéterminées VfA, VfB.
- les première et/ou deuxième valeurs prédéterminées VfA, VfB sont choisies de sorte que la différence entre VfB et VfA corresponde à un pas d'incrément des moyens de réglage de la vitesse de fil Vf.

Selon un autre aspect, l'invention concerne également un procédé de soudage à l'arc avec fil métallique fusible d'au moins une pièce métallique dans lequel on met en oeuvre un dispositif selon l'invention.

De préférence, le fil métallique fusible est relié électriquement à un dispositif selon l'invention et distribué vers la pièce métallique à une vitesse de fil Vf. On opère la fusion du fil métallique fusible et d'au moins une partie de la pièce métallique à souder au moyen d'un arc électrique établi entre l'extrémité du fil fusible et la pièce métallique à souder de manière à générer, selon un régime de transfert de métal donné, un transfert de métal du fil fusible vers un bain de soudure et pendant l'opération de soudage, on sélectionne automatiquement un type de régime transfert de métal par réglage de la vitesse de fil (Vf), ledit régime étant sélectionné parmi au moins un régime de transfert par court-circuit forcé et un régime de transfert par pulvérisation axiale.

Avantageusement, on sélectionne automatiquement un type de régime de transfert de métal par réglage de la vitesse de fil Vf, ledit régime étant un régime de transfert par court-circuit forcé lorsque (Vf) est inférieure ou égale à la première valeur VfA de vitesse de fil ou un régime de transfert par pulvérisation axiale lorsque Vf est supérieure ou égale à la deuxième valeur VfB de vitesse de fil.

L'invention va maintenant être mieux comprise grâce à la description détaillée suivante faite en références aux Figures annexées parmi lesquelles :
- la Figure 1 schématise les domaines d'énergie de soudage et les différents types de régime de transfert de métal correspondants,
- la Figure 2 schématise les formes de courant typiques d'un régime de transfert de métal par court-circuit et par court-circuit forcé,
- la Figure 3 illustre un mode de réalisation de l'invention dans lequel le dispositif de l'invention est un poste de soudage,
- la Figure 4 schématise un changement automatique de régime de transfert de métal selon un mode de réalisation de l'invention, et
- la Figure 5 schématise un changement automatique de régime de transfert de métal selon un autre mode de réalisation de l'invention.

En général, avec les postes de soudages à générateurs électroniques, l'opérateur paramètre le procédé qu'il souhaite mettre en oeuvre, en fonction de l'assemblage qu'il veut réaliser. Les paramètres sélectionnés par l'opérateur comprennent habituellement le type de matériau et l'épaisseur de la pièce à souder, le type de gaz de protection, le diamètre et le type de fil, le type de régime de transfert de métal. En fonction de la vitesse de fil, le générateur ajuste la tension d'arc, le type et la forme de courant. Il en résulte une certaine intensité de soudage, conditionnée par la vitesse de fil.

Le régime de transfert de métal est gouverné par l'énergie de soudage, définie par la tension et l'intensité d'arc. Cette énergie détermine la forme prise par l'extrémité du fil lorsqu'elle est fondue par le passage du courant et la façon dont est dont le métal constitutif du fil fondu est transféré vers le bain de soudure.

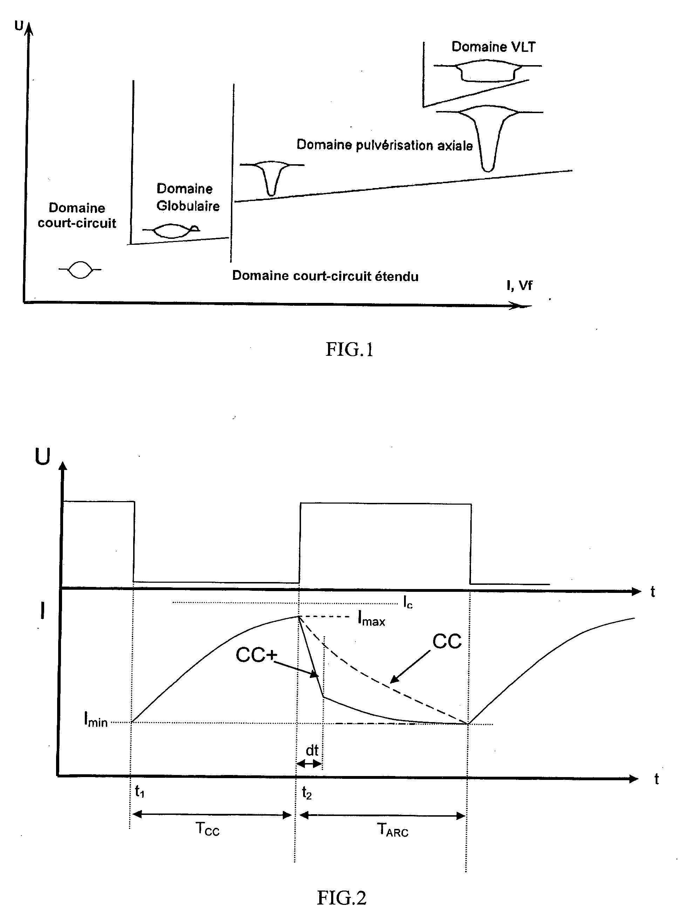

La Figure 1 schématise, en fonction de la tension d'arc (U) et du courant de soudage (I), ou de la vitesse de fil (Vf), les différents types de régimes de transfert de métal qui peuvent être rencontrés en soudage à l'arc.

Dans le cadre de la présente invention, on s'intéresse notamment aux trois types de régimes de transfert de métal conventionnels suivants :
- le court-circuit ou « *short-arc* ». Ce régime est obtenu pour de faibles énergies d'arc, typiquement de 50 à 200 A et de 15 à 22 V. Une goutte de métal fondu se forme au bout du fil d'apport et grossit progressivement jusqu'à venir en contact avec le bain de soudure, ce qui provoque un court-circuit. Le courant augmente alors rapidement faisant apparaître un pincement qui facilite le détachement de la goutte, puis l'arc se réamorce. Ce phénomène se répète à des fréquences de 50 à 200 Hz environ. Ce régime est dit "froid" et présente un arc court. Il est adapté au soudage des fines et moyennes épaisseurs en une seule passe, typiquement moins de 5 mm, et permet de maîtriser le bain de fusion lors du soudage en position.
- la pulvérisation axiale ou *« spray arc* ». Pour les hautes énergies de soudage, c'est-à-dire d'au moins 28 V pour 280 A, et au-delà d'une certaine densité de courant, typiquement supérieure à 250 A/mm² selon la nature du fil et le gaz de protection, l'extrémité du fil d'apport prend une forme de cône allongé. Le transfert du métal fondu depuis le fil vers le bain de soudure se produit sous forme de fines gouttelettes de métal fondu dont le diamètre est inférieur à celui du fil et qui sont projetées à grande vitesse dans l'axe du fil. L'arc est long de 4 à 6 mm. Ce transfert de métal procure un arc stable et peu de projections. Il autorise le soudage de plus fortes pénétrations, et des volumes de métal déposé importants, correspondant typiquement à au moins 15 m/min de vitesse fil dans le cas d'un fil en acier doux ou en inoxydable d'un diamètre de l'ordre de 1 mm.
- le régime globulaire. Pour des énergies de soudage comprises entre celles donnant les transferts par court-circuit et par pulvérisation axiale, c'est-à-dire typiquement entre 22 V pour 200 A et 28 V pour 280 A, les gouttes de métal se formant à l'extrémité du fil d'apport ont une croissance lente. L'intensité du courant n'étant pas suffisante pour avoir un effet de pincement provoquant le détachement, la goutte devient grosse, c'est-à-dire de taille supérieure au diamètre du fil considéré. Le transfert se fait soit par court-circuit, quand la goutte touche le bain, soit par détachement de la goutte sous l'effet de la pesanteur. La goutte suit alors une trajectoire qui n'est pas toujours dans l'axe de l'arc. Ce mode de transfert est instable et donne lieu à des résultats de soudage peu satisfaisants se traduisant par de faibles pénétrations de soudage et de nombreuses projections de gouttelettes métalliques. On évite en général de souder à l'arc selon ce régime.

Ces régimes de transfert de métal conventionnels se succèdent au fur et à mesure que l'énergie de soudage augmente, tel que schématisé sur la Figure 1.

Les morphologies particulières de cordons obtenues avec ces différents régimes de transferts sont également illustrées en Figure 1. Au vu de cela, on comprend qu'il est nécessaire de choisir un régime de transfert approprié au procédé mis en oeuvre, en particulier au type d'assemblage ou de joint à souder. Par exemple, un transfert de métal par pulvérisation donne lieu à un cordon dont la pénétration est plus prononcé en racine, ce qui n'est par exemple pas adapté au soudage de pièces dont les bords se chevauchent l'un l'autre.

Comme on le voit, il existe entre le régime de court-circuit et le régime de pulvérisation un domaine d'énergies de soudage qui n'est pas accessible avec des paramètres de soudage conventionnels car il conduit à un régime globulaire instable et projetant, qui ne permet pas d'augmenter la productivité dans des conditions de soudage acceptables.

Dans le cadre de l'invention, on s'intéresse également à des régimes de transfert de métal dits forcés, utilisant des paramètres de soudage non conventionnels. Ces régimes reposent sur un contrôle précis des formes de courant.

Notamment, le régime de court-circuit ou *« short arc* » forcé (encore appelé « *speed short arc* » ou « *short arc*+ ») permet d'étendre le domaine d'énergie accessible en transfert par court-circuit et de pallier les inconvénients du régime globulaire. En d'autres termes, il permet, avec une énergie de soudage normalement située dans le domaine globulaire, de maintenir un transfert par court-circuit.

Le régime de transfert par circuit-circuit forcé consiste en un contrôle des formes de courant dissocié entre la période d'arc et la période de court-circuit. On impose au courant une augmentation de forme exponentielle dans la période de court-circuit, puis une diminution plus rapide au début de la période d'arc. De cette manière, l'énergie de soudage est réduite avec, en fin de période d'arc, un retour au transfert par court-circuit avant grossissement de la goutte de métal formée à l'extrémité du fil d'apport.

La Figure 2 illustre les formes de courant utilisées dans les cas d'un procédé de soudage à l'arc en régime de transfert de type court-circuit ou en court-circuit étendu. On y voit en partie supérieure l'évolution temporelle de la tension d'arc U et en partie inférieure l'évolution temporelle de l'intensité d'arc I.

En régime conventionnel de court-circuit (CC), l'intensité d'arc augmente au cours de la période de court-circuit T_{CC} et diminue au cours de la période d'arc T_{A} selon une même forme, définie par l'inductance du générateur, de préférence un générateur électronique.

En régime de court-circuit forcé ou *short arc*+ (CC+), on impose au courant une décroissance linéaire plus rapide au début de la période d'arc, d'une durée caractéristique dt, et cela pour atteindre une intensité crête I_{c} plus élevée que l'intensité maximale Iₘₐₓ en court-circuit conventionnel, tout en réduisant l'énergie de la période d'arc. De cette façon, la formation et le détachement des gouttes est accéléré et on évite la formation de grosses gouttes à trajectoire non contrôlable. Cela permet d'étendre le domaine du régime par court-circuit en repoussant la vitesse de fil à partir de laquelle le transfert devient globulaire, et d'augmenter la productivité du régime par court-circuit dans des conditions acceptables. Le domaine correspondant aux vitesses de fil pour lesquelles le transfert est de type court-circuit forcé au lieu d'être globulaire en soudage conventionnel est appelé court-circuit étendu sur la Figure 1.

A ces régimes, il faut ajouter le régime non conventionnel de veine liquide tournante. Aux très fortes énergies de soudage, c'est-à-dire environ 40 V pour 450 A, le transfert par pulvérisation axiale est soumis à des forces électromagnétiques importantes. Sous l'effet de ces forces, le métal liquide en transfert se met à tourner, formant une veine liquide rotative.

Dans le cadre de la présente invention, on s'intéresse en particulier aux domaines d'énergies de soudage correspondant aux régimes de transfert de type court-circuit, court-circuit forcé, globulaire et pulvérisation axiale.

Comme expliqué précédemment, avant de souder son assemblage, l'opérateur sélectionne notamment un type de régime de transfert de métal adapté au procédé à mettre en oeuvre.

Toutefois, le type de transfert sélectionné est défini pour une plage de vitesses de fil. Si l'opérateur modifie le réglage de la vitesse de fil, il peut être amené à souder dans un régime de transfert de métal inadapté. En particulier, en régime par court-circuit, une augmentation de la vitesse de fil résulte en une augmentation de l'intensité moyenne du courant d'arc et de la tension d'arc, donc de l'énergie de soudage. Le courant de réamorçage est donc d'autant plus élevé, ce qui implique, au-delà d'une certaine vitesse de fil, un passage dans le domaine globulaire, avant d'atteindre le domaine de pulvérisation axiale.

La présente invention propose un poste de soudage permettant notamment de minimiser grandement, voire d'éliminer totalement, les risques pour un opérateur de sélectionner un régime de transfert de métal inadapté au procédé qu'il souhaite mettre en oeuvre, notamment un régime de type globulaire.

Pour ce faire, la solution de la présente invention repose sur le fait d'incorporer à un dispositif de soudage des moyens de sélection de la vitesse Vf de fil et des moyens de sélection du type de régime de transfert de métal coopérant avec les moyens de sélection de vitesse de fil.

Ainsi, le dispositif de l'invention permet à un opérateur d'ajuster la vitesse Vf de fil, ce qui engendre, en fonction de la valeur sélectionnée, une sélection automatique d'un type de régime de transfert, c'est-à-dire une sélection automatique d'un jeu de paramètres de soudage, notamment tension d'arc, intensité du courant d'arc, forme de courant pendant le court-circuit, conduisant audit régime de transfert.

De préférence, alors que les moyens de sélection de la vitesse de fil sont manoeuvrables manuellement ou digitalement par l'opérateur, les moyens de sélection du type de régime de transfert de métal ne sont pas actionnables directement par l'opérateur. Dit autrement, les moyens de sélection du type de transfert sont actionnables par l'intermédiaire des moyens de sélection de la vitesse Vf de fil.

Avantageusement, le type de régime de transfert de métal est sélectionné dans un groupe formé d'au moins un régime de transfert par court-circuit forcé, i. e. « *speed short arc* » ou « *short arc*+ », et un régime de transfert par pulvérisation axiale ou « *spray arc ».*

Le dispositif 23 comprend un carrossage externe et une structure interne.

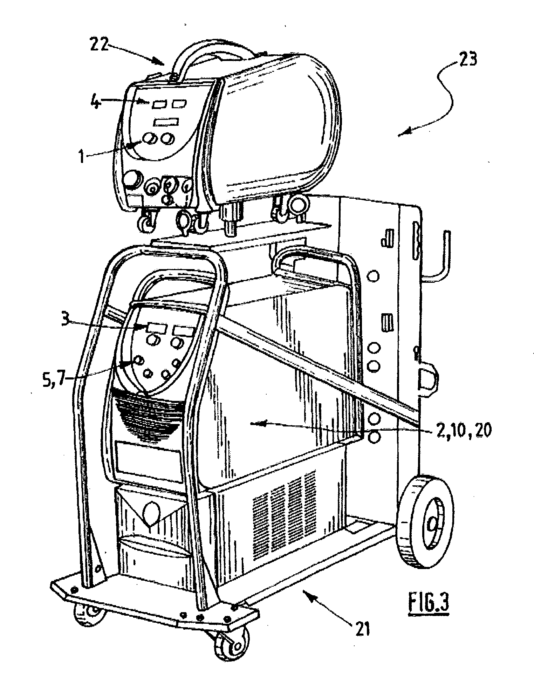

La Figure 3 schématise un dispositif de soudage 23 selon un mode de réalisation de l'invention, dans lequel le dispositif 23 est un poste de soudage.

La Figure 3 est donnée dans un but illustratif mais non limitatif de la présente invention, les moyens de sélection et de mémorisation décrits ci-après pouvant revêtir différentes formes en vue de remplir les mêmes fonctions.

Comme on le voit, le dispositif 23 de l'invention comprend de préférence au moins un générateur de courant électrique 21 et un dévidoir 22 de fil métallique fusible.

De préférence, le générateur délivre un courant d'arc d'une intensité allant de 20 à 500 A, une tension d'arc de l'ordre de 10 à 40 V. Avantageusement, le fil est distribué à des vitesses allant de 1 à 25 m/min.

Les moyens de réglage 1 de la vitesse Vf de fil peuvent consister par exemple en au moins une touche actionnable par pression, au moins un bouton rotatif ou équivalent. De préférence, les moyens de réglage de la vitesse de fil sont agencés sur le carrossage externe du dispositif 23, de préférence du dévidoir 22 de fil. Les moyens de réglage 1 de la vitesse de fil Vf sont de préférence de type numérique, c'est-à-dire que la vitesse est ajustée par incrément.

En outre, le dispositif 23 peut comprendre des moyens de sélection de la longueur d'arc, de préférence par incrément, le pas étant de l'ordre de 0,1 à 0,2 V.

Selon l'invention, les moyens de sélection 2 du type de régime de transfert de métal coopèrent avec les moyens de réglage 1 de la vitesse Vf de fil de manière à ce que, une fois la vitesse de fil réglée par l'opérateur, le dispositif de soudage 23 sélectionne automatiquement, en fonction du réglage de la vitesse Vf de fil, un type de régime de transfert de métal.

Pour cela, le dispositif 23 de l'invention comprend des moyens de mémorisation 10 pour mémoriser les types de régimes de transfert sélectionnables par les moyens de sélection 2.

De préférence, les moyens de mémorisation 10 sont incorporés dans la structure interne du dispositif de soudage 23, de préférence à l'intérieur d'un générateur de courant 21, tel que schématisé sur la Figure 3,.

Les moyens de mémorisation 10 comprennent un espace mémoire, par exemple un espace sur un disque dur du générateur 21, dans lequel est stockée une base de données contenant une pluralité de tableaux de correspondance entre vitesse de fil Vf et paramètres de soudage.

Plus précisément, ces tableaux contiennent des jeux de paramètres de soudage comprenant de préférence au moins la tension d'arc, l'intensité d'arc, la longueur d'arc, ou de manière équivalente la tension d'arc, la constante de temps qui définit le temps de montée de l'évolution exponentielle que l'on impose au courant. Chaque jeu correspond à une valeur de vitesse de fil Vf et définit un point de fonctionnement.

Dans chacun de ces tableaux, l'évolution des valeurs de ces paramètres de soudage est corrélée à la vitesse de fil Vf selon une loi prédéfinie, ou synergie, qui change selon la valeur de vitesse Vf de fil donnée. Les tableaux de correspondance ou de synergie regroupent ainsi plusieurs types de régime de transfert de métal.

Les moyens de sélection 2 du type de régime de transfert vont en fait conduire l'opérateur, lors de la sélection de la vitesse de fil, à sélectionner automatiquement un jeu de paramètres de soudage dans un tableau de correspondance donné, ces paramètres de soudage ayant été défini au préalable pour donner lieu à un type de régime de transfert de métal adapté au procédé qu'il souhaite mettre en oeuvre.

Une pluralité de tableaux de correspondance entre vitesse de fil et paramètres de soudage peut être mémorisée pour chaque configuration de soudage, c'est-à-dire une épaisseur de matériau à souder, un type de fil, un type de gaz, un type de joint, une position de soudage...

L'ensemble des tableaux de correspondances contenus dans la base de données des moyens de mémorisation 10 peut par exemple être complété suite à des essais de soudage sur différents types d'assemblages témoins. Pour chaque configuration de soudage, on mémorise les paramètres de soudage donnant les meilleurs résultats de soudage à la vitesse de fil sélectionnée et le type de régime de transfert résultant.

Pour mettre en oeuvre le procédé de soudage selon un régime de transfert de métal adapté et obtenir des résultats de soudage satisfaisants, quelle que soit la vitesse Vf de fil sélectionnée, le dispositif 23 de l'invention peut comprendre des moyens de mémorisation 10 qui permettent en outre de mémoriser au moins une première valeur prédéterminée VfA de vitesse de fil et une deuxième valeur prédéterminée VfB de vitesse de fil et des moyens de comparaison 20 de la vitesse de fil Vf sélectionnée avec lesdites première et deuxième valeurs (VfA, VfB).

Dans le cas où le dispositif de l'invention est un poste de soudage, les moyens de mémorisation 10 et de comparaison 20 sont de préférence incorporés dans la structure interne du dispositif 23, de préférence dans la structure interne du générateur 21.

Conformément à l'invention, les moyens de sélection 2 du type de régime de transfert de métal coopèrent avec les moyens de mémorisation 10 et de comparaison 20 de manière à ce que l'opérateur sélectionne automatiquement au moins un premier type de régime de transfert lorsque Vf est inférieure ou égale à la première valeur VfA (Vf≤VfA), et un deuxième type de régime de transfert de métal lorsque Vf est supérieure ou égale à VfB (Vf≥VfB).

En fait, en utilisant un dispositif de soudage selon l'invention, le réglage des paramètres de soudage se fait selon le mode opératoire suivant.

Pour une configuration de soudage donnée, à chaque fois que l'opérateur sélectionne une vitesse de fil Vf, cette sélection entraîne une interrogation des moyens de mémorisation 10 et de comparaison 20.

Tant que Vf≤VfA, le dispositif 23 sélectionne un jeu de paramètres de soudage donnant lieu à un premier régime de transfert. Les paramètres de soudage évoluent dans cette plage de vitesses de fil Vf≤VfA selon une même loi.

Lorsque l'opérateur augmente la vitesse Vf et dès que Vf≥VfB, le dispositif 23 sélectionne automatiquement un jeu de paramètres de soudage dont l'évolution est définie en fonction de la vitesse Vf selon une autre loi. Ceci donne lieu à la sélection, pour Vf≥VfB, d'un deuxième type de régime de transfert différent du premier type de régime de transfert.

Les valeurs prédéterminées de vitesse de fil peuvent être préalablement mémorisées, i. e préenregistrées, dans la structure interne du dispositif 23, par exemple lors de préréglages effectués en usine avant livraison du dispositif.

De façon alternative, les moyens de mémorisation 10 peuvent coopérer avec des moyens de sélection 7 des au moins une première et deuxième valeurs de vitesse de fil VfA, VfB, pour permettre, après sélection par l'opérateur lui-même, une mémorisation automatique d'au moins une valeur de vitesse de fil, notamment au moins une valeur de vitesse de fil prédéterminée parmi VfA, VfB. Ceci est avantageux lorsque, pour le procédé de soudage opéré, il y a recouvrement des plages de vitesse de fil définissant les premier et deuxième types de régime de transfert. Ainsi, l'opérateur dispose d'un certain degré de liberté pour choisir les vitesses VfA et VfB entre lesquelles s'effectue la transition entre premier et deuxième types de régime et/ou des troisième et premier types de régime. Les moyens de sélection 7 sont avantageusement agencés sur le carrossage externe du poste de soudage 23.

Dans le cadre de la présente invention, on utilise avantageusement des moyens de réglage 1 de la vitesse de fil Vf de type numérique. Les moyens de réglage 1 de type numérique autorisent ainsi un réglage de la vitesse Vf de fil par incrément d'un pas compris entre environ 0,01 et 0,5 m/min, de préférence de l'ordre de 0.1 m/min. Ainsi, dans le cas où le premier type de régime de transfert est un régime de court-circuit étendu et le deuxième type de régime de transfert est un régime de pulvérisation axiale, il est possible de passer au premier et au deuxième type de transfert en un incrément de vitesse de fil, sans passer par le régime globulaire.

De préférence, le dévidage du fil de soudage par le dévidoir 22 est régulé électroniquement, ce qui confère au fil, une fois réglée, une vitesse constante.

Dans le cadre de la première invention, le premier type de régime de transfert est avantageusement un régime de court-circuit forcé, i. e. *short arc*+ ou *speed short arc,* et le deuxième type de régime de transfert est avantageusement un régime de pulvérisation axiale, i. e *spray arc.* De cette façon, en choisissant judicieusement les première et deuxième valeurs VfA et VfB, et un pas d'incrément de vitesse de fil adapté, l'opérateur peut passer automatiquement d'un régime de transfert de type court-circuit forcé à un régime de transfert par pulvérisation, sans risquer de sélectionner un régime de transfert de type globulaire.

La coopération des moyens de réglage 1 de la vitesse de fil, de sélection 2 du type de transfert de métal, de mémorisation 10 et de comparaison 20 peut être gérée par un système d'exploitation, un logiciel, un programme informatique ou équivalent incorporés dans la structure interne du dispositif 23, de préférence dans la structure interne d'un générateur 21.

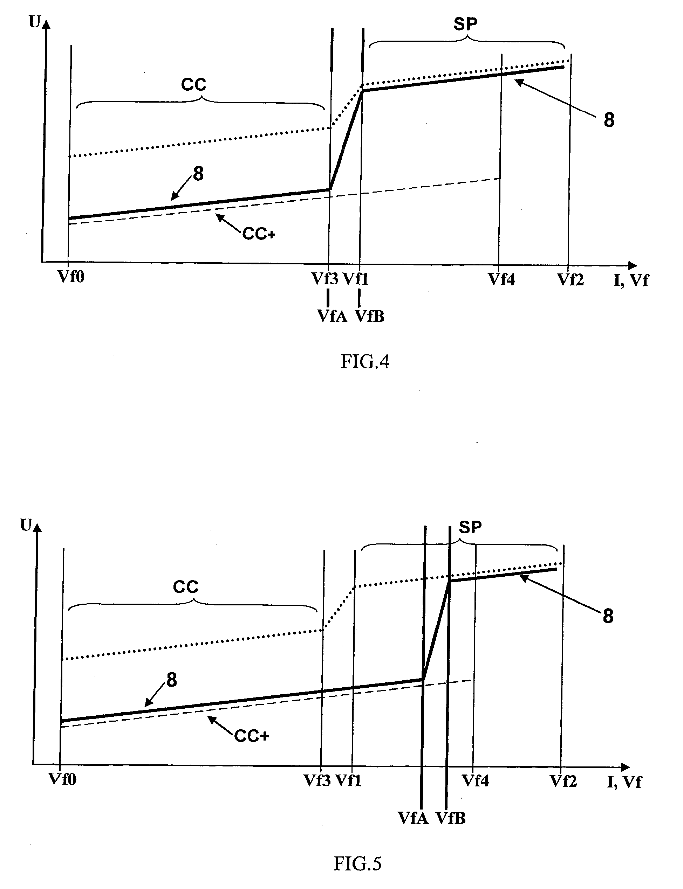

Les Figures 4 et 5 illustrent l'évolution de la tension de soudage (ou d'arc) en fonction de la vitesse de fil Vf selon différents modes de réalisation de la présente invention (ligne en trait plein (-), également désignée par la flèche 8), en comparaison avec des procédés de soudage dans lesquels l'évolution de la tension de soudage résulte de l'utilisation de dispositifs hors invention.

La ligne en points (....) schématise ainsi l'évolution de la tension de soudage sans dispositif selon l'invention lors de l'utilisation de régimes de transferts conventionnels, c'est-à-dire sans contrôle des formes de courant. Comme on le voit, entre des vitesses de fil Vf0 et Vf3 on rencontre d'abord un régime de court-circuit conventionnel (CC), puis un régime globulaire, entre Vf3 et Vf1, et un régime de pulvérisation axiale (SP). Le domaine de pulvérisation axiale s'étend entre les vitesses de fil Vf1 et Vf2.

La ligne en trait discontinu (_ _ _) schématise l'évolution de la tension de soudage obtenue lors d'un procédé de soudage utilisant un régime de court-circuit forcé (CC+), tel que décrit précédemment. Le domaine de transfert par court-circuit forcé s'étend d'une vitesse de fil Vf0 à une vitesse de fil Vf4. Le régime CC+ permet d'étendre le domaine de vitesses de fil pour lesquels le transfert est du type court-circuit, permettant ainsi l'utilisation d'énergies de soudage donnant lieu habituellement à un transfert globulaire.

Toutefois, même en court-circuit forcé il existe une vitesse de fil maximale au-delà de laquelle le régime devient globulaire. En outre, l'opérateur peut avoir besoin d'augmenter la vitesse de fil et d'utiliser un régime de pulvérisation axiale. C'est le cas par exemple lorsque l'on souhaite augmenter le volume de métal déposé et/ou la pénétration.

Selon un mode de réalisation particulier de l'invention illustré sur la Figure 4 par la ligne 8, la vitesse VfA est choisie de sorte qu'elle soit égale à la vitesse maximale Vf3 de transfert par court-circuit conventionnel et la vitesse VfB est choisie de sorte qu'elle soit égale à la vitesse minimale Vf1 du transfert par pulvérisation axiale. De préférence, au moins les vitesses VfB, VfA, Vf1 sont préenregistrées dans le dispositif 23.

La Figure 5 schématise un autre mode de réalisation de l'invention dans lequel l'opérateur, en augmentant la vitesse de fil Vf, effectue automatiquement une transition entre régime de court-circuit forcé CC+ (jusqu'à VfA) et régime de pulvérisation axiale SP (à partir de VfB), la transition pouvant s'effectuant cette fois pour différentes valeurs de vitesses prédéterminées à la condition que VfA soit supérieure ou égale à Vf0 et inférieure ou égale à Vf4 (Vf0≤VfA≤Vf4), et que VfB soit supérieure ou égale à Vf1 et inférieure ou égale à Vf2 (Vf1≤VfB≤Vf2), VfA étant inférieure à VfB.

Dans ce mode de réalisation, les moyens de mémorisation 10 coopèrent de préférence avec des moyens de sélection 7 des valeurs de vitesse de fil VfA, VfB. De cette manière, l'opérateur peut définir lui-même les vitesses auxquelles il souhaite voir s'effectuer la transition. Ceci est possible car, comme le montre la Figure 5, il y a recouvrement des plages de vitesse de fil définissant les domaines de court-circuit forcé et de pulvérisation axiale.

Dans le cadre de la présente invention, on choisit avantageusement les vitesses VfA et VFB, ainsi que le pas d'incrément de la vitesse de fil de manière à effectuer automatiquement une transition entre régime de court-circuit forcé CC+ (jusqu'à VfA) et régime de pulvérisation axiale SP (à partir de VfB) sans passer par un régime globulaire. Avantageusement, cette transition s'effectue en un incrément de vitesse de fil, i. e. VfB est égal VfA à laquelle on ajoute un pas d'incrément des moyens de sélection 1 de vitesse de fil.

On comprend alors qu'un avantage considérable de la présente invention est d'autoriser une sélection automatique d'un régime de transfert de métal adapté au procédé de soudage opéré. Notamment, le dispositif de l'invention permet l'utilisation par l'opérateur d'une synergie combinant des points de fonctionnements des régimes de court-circuit forcé et de pulvérisation axiale, la transition entre ces régimes pouvant s'effectuer sans passage en mode globulaire, à des vitesses de fil VfA, VfB adaptées au procédé que souhaite que souhaite mettre en oeuvre l'opérateur, i. e. à la configuration de soudage, notamment de la nature et de l'épaisseur du matériau à souder, du type de fil mis en oeuvre, du type de gaz de protection, du type de joint, de la position de soudage ou du caractère automatique ou manuel du procédé.

Avantageusement, le dispositif de soudage de l'invention comprend en outre des moyens de sélection 5 d'au moins un paramètre définissant la configuration de soudage choisi parmi le type de métal à souder, l'épaisseur à souder, la nature et /ou le diamètre du fil d'apport fusible, le type de gaz de protection, le type de joint à souder, la position de soudage, le caractère automatique et manuel du procédé, ... De préférence, les moyens de sélection 5 sont agencés sur le carrossage externe du dispositif 23.

De manière optionnelle, au moins un moyen d'affichage 3, 4, tel un écran ou un voyant associé à une indication écrite, est agencé sur le carrossage externe du dispositif 23. Au moins un des moyens de réglage 1, de sélection 2, 5, 7, de mémorisation 10 ou de comparaison 20 coopèrent avec ledit moyen d'affichage 3, 4 de manière à afficher une ou plusieurs informations choisies parmi au moins les paramètres de soudage, la vitesse de fil...

A titre d'exemple, les tableaux 1 et 2 ci-dessous illustrent des jeux de paramètres de soudage correspondant à différentes valeurs de vitesse de fil Vf sans l'invention, et ce pour une configuration de soudage donnée. Les tableaux 3 et 4 illustrent des jeux de paramètres de soudage correspondant à différentes valeurs de vitesse de fil Vf pour les modes de réalisation de l'invention illustrés en Figure 4 et 5 respectivement, la configuration de soudage étant identique.

Dans tous les cas, une torche de soudage d'une puissance de l'ordre de 450 A alimentée en courant par un générateur commercialisé par AIR LIQUIDE WELDING, sous l'appellation *Digiwave 2 ou Citowave 2* est utilisée. La torche est munie en son extrémité d'un fil métallique fusible de diamètre 1.2 mm. Les pièces sont soudées en angle et en position à plat. Ce sont des pièces en acier doux, i. e. acier au carbone, d'une épaisseur de 1 mm, soudées avec un gaz de protection commercialisé par AIR LIQUIDE sous la référence ARCAL 21 et constitué d'environ 8% de CO₂ et d'argon pour le reste.

Les Tableaux 1 à 4 fournissent les principaux paramètres de soudage avec les unités correspondantes, à savoir la constante de temps qui définit le temps de montée caractéristique de l'évolution exponentielle que l'on impose au courant au cours de la période de court-circuit (cte cc), l'intensité moyenne du courant d'arc (Imoy), la tension d'arc (Uarc) et la tension moyenne de l'arc (Umoy).

Le Tableau 1 illustre l'évolution des paramètres de soudage en fonction de la vitesse fil dans le cas d'un procédé opéré en régime de court-circuit forcé. Celui-ci s'étend d'une vitesse d'une vitesse Vf0 de 1 m/min à une vitesse Vf4 de 12 m/min.

Le Tableau 2 illustre l'évolution des paramètres de soudage en fonction de la vitesse fil dans le cas d'un procédé opéré avec les régimes de transferts conventionnel de court-circuit et de pulvérisation axiale. Le régime de court-circuit commence à une vitesse Vf0 de 1 m/min jusqu'à une vitesse Vf3 de 6 m/min et le régime de pulvérisation axiale s'étend d'une vitesse Vf1 de 6,5 m/min à une vitesse Vf2 de 18 m/min.

Le Tableau 3 illustre quant à lui l'évolution des paramètres de soudage en fonction de la vitesse fil dans le cas d'un procédé opéré avec un dispositif de soudage selon le mode de réalisation de l'invention illustré en Figure 4. Dans ce cas, la première valeur prédéterminée de vitesse de fil VfA est de 6 m/min et la deuxième valeur prédéterminée VfB est de 6,5 m/min, laquelle vitesse VfB correspond à la vitesse Vf1 de début du régime de pulvérisation axiale.

Enfin, le Tableau 4 illustre l'évolution des paramètres de soudage en fonction de la vitesse fil dans le cas d'un procédé opéré avec un dispositif de soudage selon le mode de réalisation de l'invention illustré en Figure 5. Dans ce cas, la première valeur VfA est de 9 m/min et la deuxième valeur VfB est de 10 m/min.

**Tableau 1**

| **Vf (m/min)** | **cte cc (ms)** | **Imoy (A)** | **Uarc (V)** | **Umoy (V)** | **Type de transfert** |
|---|---|---|---|---|---|
| 1 | 7 | 55 | 14 | 13.4 | court-circuit forcé |
| 1.5 | 7.3 | 80 | 15 | 13.4 | court-circuit forcé |
| 2 | 7.3 | 100 | 16 | 14.4 | court-circuit forcé |
| 3 | 7.3 | 144 | 17.4 | 15 | court-circuit forcé |
| 3.5 | 7.3 | 156 | 18.4 | 15.6 | court-circuit forcé |
| 5.5 | 3.5 | 220 | 19.6 | 17.6 | court-circuit forcé |
| 6 | 3 | 237 | 20 | 18.2 | court-circuit forcé |
| 7 | 3 | 250 | 21.4 | 19.4 | court-circuit forcé |
| 8 | 2.5 | 270 | 22 | 20 | court-circuit forcé |
| 9 | 1.6 | 300 | 23 | 21.2 | court-circuit forcé |
| 12 | 1.6 | 390 | 30 | 28.2 | court-circuit forcé |

**Tableau 2**

| **Vf (m/min)** | **cte cc (ms)** | **Imoy (A)** | **Uarc (V)** | **Umoy (V)** | **Type de transfert** |
|---|---|---|---|---|---|
| 1 | 14 | 56 | 14.4 | 13 | court-circuit |
| 1.5 | 14 | 76 | 15.4 | 14 | court-circuit |
| 2 | 14 | 102 | 16.4 | 14.6 | court-circuit |
| 2.5 | 14 | 120 | 17.6 | 15.6 | court-circuit |
| 3 | 14 | 146 | 19 | 16 | court-circuit |
| 4 | 12 | 188 | 19.8 | 16.6 | court-circuit |
| 5 | 10 | 200 | 20.6 | 17.6 | court-circuit |
| 6 | 10 | 220 | 22 | 19 | court-circuit |
| 6.5 | 10 | 250 | 24.8 | 24.2 | Pulvérisation axiale |
| 7 | 10 | 260 | 25.8 | 25.2 | Pulvérisation axiale |
| 10 | 10 | 330 | 27.4 | 26.8 | Pulvérisation axiale |
| 12 | 10 | 400 | 29.8 | 29 | Pulvérisation axiale |
| 15 | 10 | 445 | 32 | 31 | Pulvérisation axiale |
| 18 | 10 | 480 | 34.6 | 33.4 | Pulvérisation axiale |

**Tableau 3**

| **Vf (m/min)** | **cte cc (ms)** | **Imoy (A)** | **Uarc (V)** | **Umoy (V)** | **Type de transfert** |
|---|---|---|---|---|---|
| 1 | 7 | 55 | 14 | 13.4 | court-circuit forcé |
| 1.5 | 7.3 | 80 | 15 | 13.4 | court-circuit forcé |
| 2 | 7.3 | 100 | 16 | 14.4 | court-circuit forcé |
| 3 | 7.3 | 144 | 17.4 | 15 | court-circuit forcé |
| 3.5 | 7.3 | 156 | 18.4 | 15.6 | court-circuit forcé |
| 5.5 | 3.5 | 220 | 19.6 | 17.6 | court-circuit forcé |
| 6 | 3 | 237 | 20 | 18.2 | court-circuit forcé |
| 6.5 | 3 | 250 | 24.8 | 24.2 | Pulvérisation axiale |
| 7 | 3 | 280 | 25.8 | 25.2 | Pulvérisation axiale |
| 10 | 3 | 330 | 27.4 | 26.8 | Pulvérisation axiale |
| 12 | 3 | 400 | 29.8 | 29 | Pulvérisation axiale |
| 15 | 3 | 445 | 32 | 31 | Pulvérisation axiale |
| 18 | 3 | 480 | 34.6 | 33.4 | Pulvérisation axiale |

**Tableau 4**

| **Vf (m/min)** | **cte cc (ms)** | **Imoy (A)** | **Uarc (V)** | **Umoy (V)** | **Type de transfert** |
|---|---|---|---|---|---|
| 1 | 7 | 55 | 14 | 13.4 | court-circuit forcé |
| 1.5 | 7.3 | 80 | 15 | 13.4 | court-circuit forcé |
| 2 | 7.3 | 100 | 16 | 14.4 | court-circuit forcé |
| 3 | 7.3 | 144 | 17.4 | 15 | court-circuit forcé |
| 3.5 | 7.3 | 156 | 18.4 | 15.6 | court-circuit forcé |
| 5.5 | 3.5 | 220 | 19.6 | 17.6 | court-circuit forcé |
| 6 | 3 | 237 | 20 | 18.2 | court-circuit forcé |
| 7 | 3 | 250 | 21.4 | 19.4 | court-circuit forcé |
| 8 | 2.5 | 270 | 22 | 20 | court-circuit forcé |
| 9 | 1.6 | 300 | 23 | 21.2 | court-circuit forcé |
| 10 | 3 | 330 | 27.4 | 26.8 | Pulvérisation axiale |
| 12 | 3 | 400 | 29.8 | 29 | Pulvérisation axiale |
| 15 | 3 | 445 | 32 | 31 | Pulvérisation axiale |
| 18 | 3 | 480 | 34.6 | 33.4 | Pulvérisation axiale |

Selon un autre aspect, l'invention concerne également un procédé de soudage à l'arc avec fil fusible d'au moins une pièce métallique à souder mettant en oeuvre un dispositif de soudage selon l'invention.

Le soudage de la pièce métallique est opéré par déplacement relatif du fil métallique fusible par rapport à ladite pièce selon une direction dite de soudage, lequel fil est relié électriquement à un dispositif selon l'invention.

Le fil est distribué vers la pièce métallique à une vitesse de fil (Vf) et on opère la fusion du fil métallique fusible et d'au moins une partie de la pièce métallique à souder au moyen d'un arc électrique établi entre l'extrémité du fil fusible et la pièce métallique à souder de manière à générer, selon un régime de transfert de métal donné, un transfert de métal du fil fusible vers un bain de soudure. On obtient un cordon de soudure par re-solidification progressive du bain de soudure et déplacement relatif du fil fusible et de la pièce métallique.

En outre, un flux de gaz inerte est distribué sur le bain de soudure par une buse équipant la torche de soudage et positionnée au-dessus des pièces à souder de manière à protéger le métal fondu de l'air ambiant.

Avantageusement, l'arc électrique MIG ou MAG est protégé par un flux de gaz contenant majoritairement au moins un composé inerte choisi parmi l'hélium et l'argon, de préférence au moins 80%, et optionnellement un composé minoritaire à caractère chimique oxydant choisi parmi le dioxyde de carbone (CO₂) et le dioxygène (O₂).

L'invention améliore considérablement la facilité de réglage par un opérateur d'un poste de soudage et lui permet de mettre en oeuvre un procédé de soudage à l'arc selon un régime de transfert de métal adapté, quelle que soit la vitesse de fil sélectionnée. Pendant l'opération de soudage, on sélectionne automatiquement un type de régime transfert de métal par réglage de la vitesse de fil, ledit régime étant sélectionné parmi au moins un régime de transfert par court-circuit forcé et un régime de transfert par pulvérisation axiale.

Grâce au dispositif de l'invention, ledit régime de transfert est peut être sélectionné entre un régime de transfert par court-circuit forcé et un régime de transfert par pulvérisation axiale, sans passage en régime globulaire. Pour ce faire, on détermine avantageusement les première et deuxième valeurs de vitesse de fil VfA et VfB de sorte que le réglage de la vitesse de fil Vf entre VfA et VfB est opéré en un incrément des moyens de réglage 1 de ladite vitesse de fil (Vf), de sorte que la transition entre régime de transfert par court-circuit forcé et régime de transfert par pulvérisation axiale soit directe.

L'application principale de la présente invention est un procédé de soudage de pièces métalliques, notamment des pièces en alliages ferreux, en aluminium ou an alliage d'aluminium, de préférence en acier inoxydable ou en acier au carbone.

## Revendications

1. Dispositif de soudage à l'arc avec fil métallique fusible comprenant des moyens de réglage (1) d'une vitesse (Vf) de fil et des moyens de sélection (2) d'un type de régime de transfert de métal, les moyens de réglage (1) de vitesse (Vf) de fil étant manoeuvrables manuellement ou digitalement par un opérateur, **caractérisé en ce que** les moyens de sélection (2) d'un type de régime de transfert de métal coopèrent avec les moyens de réglage (1) de la vitesse (Vf) de fil de manière à permettre à l'opérateur de régler la vitesse (Vf) de fil par manoeuvre desdits moyens de réglage (1) de vitesse (Vf) de fil et de sélectionner automatiquement, en fonction dudit réglage de vitesse de fil (Vf), un type de régime de transfert de métal.

2. Dispositif selon la revendication précédente, **caractérisé en ce que** le type de régime de transfert de métal est sélectionné dans un groupe formé d'au moins un régime de transfert par court-circuit forcé et un régime de transfert par pulvérisation axiale.

3. Dispositif selon l'une des revendications précédentes, **caractérisé en ce qu'**il comprend des moyens de mémorisation (10) pour mémoriser au moins un type de régime de transfert de métal sélectionnable par les moyens de sélection (2) d'un type de régime de transfert de métal.

4. Dispositif selon l'une des revendications précédentes, **caractérisé en ce que** lesdits moyens de mémorisation (10) permettent en outre de mémoriser au moins une première valeur prédéterminée (VfA) de vitesse de fil et une deuxième valeur prédéterminée (VfB) de vitesse de fil, la première valeur (VfA) étant inférieure à la deuxième valeur (VfB).

5. Dispositif selon l'une des revendications précédentes, **caractérisé en ce qu'**il comprend en outre des moyens de comparaison (20) de la vitesse de fil (Vf) avec lesdites première et deuxième valeurs de vitesse de fil (VfA, VfB).

6. Dispositif selon l'une des revendications précédentes, caractérisé en ce les moyens de sélection (2) du type de régime de transfert de métal coopèrent avec les moyens de mémorisation (10) et de comparaison (20) de manière à ce que l'opérateur sélectionne automatiquement au moins :
- un premier type de régime de transfert lorsque (Vf) est inférieure ou égale à la première valeur prédéterminée (VfA), et
- un deuxième type de régime de transfert de métal lorsque (Vf) est supérieure ou égale à la deuxième valeur prédéterminée (VfB).

7. Dispositif selon l'une des revendications précédentes, **caractérisé en ce que** le premier type de régime de transfert de métal est un régime de transfert par court-circuit forcé et le deuxième type de régime de transfert de métal est un régime de transfert par pulvérisation axiale.

8. Dispositif selon l'une des revendications précédentes, **caractérisé en ce que** les moyens de mémorisation (10) coopèrent avec des moyens de sélection (7) des première et/ou deuxième valeurs prédéterminées (VfA, VfB) pour permettre, après sélection, une mémorisation automatique des valeurs desdites première et deuxième valeurs prédéterminées (VfA, VfB).

9. Dispositif selon la revendication 8, **caractérisé en ce que** les première et/ou deuxième valeurs prédéterminées (VfA, VfB) sont choisies de sorte que la différence entre VfB et VfA corresponde à un pas d'incrément des moyens de réglage (1) de la vitesse de fil (Vf).

10. Procédé de soudage à l'arc avec fil métallique fusible d'au moins une pièce métallique dans lequel on met en oeuvre un dispositif selon l'une des revendications précédentes.

11. Procédé selon la revendication précédente, **caractérisé en ce que** le fil métallique fusible est relié électriquement à un dispositif de soudage selon l'une des revendications 1 à 9 et distribué vers la pièce métallique à une vitesse de fil (Vf) et on opère la fusion du fil métallique fusible et d'au moins une partie de la pièce métallique à souder au moyen d'un arc électrique établi entre l'extrémité du fil fusible et la pièce métallique à souder de manière à générer, selon un régime de transfert de métal donné, un transfert de métal du fil fusible vers un bain de soudure, dans lequel pendant l'opération de soudage, on sélectionne automatiquement un type de régime transfert de métal par réglage de la vitesse de fil (Vf), ledit régime étant sélectionné parmi au moins un régime de transfert par court-circuit forcé et un régime de transfert par pulvérisation axiale.

12. Procédé selon l'une des revendications 10 ou 11, **caractérisé en ce que** l'on sélectionne automatiquement un type de régime de transfert de métal par réglage de la vitesse de fil (Vf), ledit régime étant un régime de transfert par court-circuit forcé lorsque (Vf) est inférieure ou égale à la première valeur (VfA) de vitesse de fil ou un régime de transfert par pulvérisation axiale lorsque Vf est supérieure ou égale à la deuxième valeur (VfB) de vitesse de fil.

## Patentansprüche

1. Vorrichtung zum Lichtbogenschweißen mit einem Schmelzdraht, Mittel zum Einstellen (1) einer Geschwindigkeit (Vf) des Drahtes und Mittel zur Auswahl (2) eines Typs der Metallübertragungsart umfassend, wobei die Mittel zum Einstellen (1) einer Geschwindigkeit (Vf) des Drahtes von Hand oder digital durch einen Bediener betätigt werden können, **dadurch gekennzeichnet, dass** die Mittel zur Auswahl (2) eines Typs der Metallübertragungsart mit den Mitteln zum Einstellen (1) einer Geschwindigkeit (Vf) des Drahtes zusammenwirken, um es dem Bediener zu ermöglichen, die Geschwindigkeit (Vf) des Drahtes durch Betätigen der Mittel zum Einstellen (1) einer Geschwindigkeit (Vf) des Drahtes einzustellen, und automatisch, in Abhängigkeit von der Einstellung der Geschwindigkeit (Vf) des Drahtes einen Typ der Metallübertragungsart auszuwählen.

2. Vorrichtung nach dem vorherigen Anspruch, **dadurch gekennzeichnet, dass** der Typ der Metallübertragungsart aus einer Gruppe ausgewählt wird, die durch zumindest eine Übertragungsart durch erzwungenen Kurzschluss und eine Übertragungsart durch axiales Sprühen gebildet wird.

3. Vorrichtung nach einem der vorherigen Ansprüche, **dadurch gekennzeichnet, dass** sie Speichermittel (10) zum Speichern zumindest eines Typs der Metallübertragungsart umfasst, der durch die Mittel zur Auswahl (2) eines Typs der Metallübertragungsart ausgewählt werden kann.

4. Vorrichtung nach einem der vorherigen Ansprüche, **dadurch gekennzeichnet, dass** es die Speichermittel (10) darüber hinaus ermöglichen, zumindest einen ersten vorbestimmten Wert (VfA) für die Drahtgeschwindigkeit und einen zweiten vorbestimmten Wert (VfB) für die Drahtgeschwindigkeit zu speichern, wobei der erste Wert (VfA) kleiner ist, als der zweite Wert (VfB).

5. Vorrichtung nach einem der vorherigen Ansprüche, **dadurch gekennzeichnet, dass** sie darüber hinaus Mittel (20) zum Vergleichen der Drahtgeschwindigkeit (Vf) mit den ersten und zweiten Werten für die Drahtgeschwindigkeit (VfA, VfB) umfasst.

6. Vorrichtung nach einem der vorherigen Ansprüche, **dadurch gekennzeichnet, dass** die Mittel zur Auswahl (2) des Typs der Metallübertragungsart mit den Speichermitteln (10) und den Mitteln (20) zum Vergleichen zusammenwirken, damit der Bediener automatisch zumindest folgendes auswählt:
- einen ersten Typ der Übertragungsart, wenn (Vf) kleiner oder gleich dem ersten vorbestimmten Wert (VfA) ist, und
- einen zweiten Typ der Metallübertragungsart, wenn (Vf) größer oder gleich dem zweiten vorbestimmten Wert (VfB) ist.

7. Vorrichtung nach einem der vorherigen Ansprüche, **dadurch gekennzeichnet, dass** der erste Typ der Metallübertragungsart eine Übertragungsart durch erzwungenen Kurzschluss ist und der zweite Typ der Metallübertragungsart eine Übertragungsart durch axiales Sprühen ist.

8. Vorrichtung nach einem der vorherigen Ansprüche, **dadurch gekennzeichnet, dass** die Speichermittel (10) mit Mitteln zum Auswählen (7) des ersten und/ oder zweiten vorbestimmten Werts (VfA, VfB) zusammenwirken, um nach der Auswahl eine automatische Speicherung der Werte des ersten und zweiten vorbestimmten Werts (VfA, VfB) zu ermöglichen.

9. Vorrichtung nach Anspruch 8, **dadurch gekennzeichnet, dass** der erste und/ oder zweite vorbestimmte Wert (VfA, VfB) derart ausgewählt werden, dass der Unterschied zwischen VfB und VfA einem Inkrementschritt der Mittel zum Einstellen (1) der Drahtgeschwindigkeit (Vf) entspricht.

10. Verfahren zum Lichtbogenschweißen mit einem Schmelzdraht zumindest eines metallischen Teils, wobei man eine Vorrichtung nach einem der vorherigen Ansprüche anwendet.

11. Verfahren nach dem vorherigen Anspruch, **dadurch gekennzeichnet, dass** der Schmelzdraht elektrisch mit einer Vorrichtung zum Schweißen nach einem der Ansprüche 1 bis 9 verbunden ist, und mit einer Drahtgeschwindigkeit (Vf) zum metallischen Teil zugeführt wird, und man das Schmelzen des Schmelzdrahtes und zumindest eines Teils des metallischen Teils vornimmt, das mittels Lichtbogen zu verschweißen ist, der zwischen dem Ende des Schmelzdrahtes und des zu schweißenden metallischen Teils gebildet wird, um entsprechend einer gegebenen Metallübertragungsart eine Metallübertragung vom Schmelzdraht in ein Schweißbad zu erzeugen, wobei man während des Schweißvorganges durch Einstellen der Geschwindigkeit (Vf) des Drahtes automatisch einen Typen der Metallübertragungsart auswählt, wobei die Art aus zumindest einer Übertragungsart durch erzwungenen Kurzschluss und einer Übertragungsart durch axiales Sprühen ausgewählt wird.

12. Verfahren nach einem der Ansprüche 10 oder 11, **dadurch gekennzeichnet, dass** man automatisch einen Typen der Metallübertragungsart durch Einstellen der Geschwindigkeit (Vf) des Drahtes auswählt, wobei die Art eine Übertragungsart durch erzwungenen Kurzschluss ist, wenn (Vf) kleiner oder gleich dem ersten Wert (VfA) für die Drahtgeschwindigkeit ist, oder eine Übertragungsart durch axiales Sprühen, wenn Vf größer oder gleich dem zweiten Wert (VfB) für die Drahtgeschwindigkeit ist.

## Claims

1. Arc welding device with fusible metal wire comprising means for setting (1) a wire speed (Vf) and means for selecting (2) a metal transfer rate type, with the means for setting (1) the wire speed (Vf) able to be manoeuvred by the hands or fingers of an operator, **characterised in that** the means for selecting (2) a metal transfer rate type cooperating with the means for setting (1) the wire speed (Vf) in such a way as to allow the operator to set the wire speed (Vf) by manoeuvring said means for setting (1) the wire speed (Vf) and to automatically select, according to said wire speed setting (Vf), a metal transfer rate type.

2. Device as claimed in the preceding claim, **characterised in that** the metal transfer rate type is selected from the group formed of at least one transfer rate by forced short-circuit and a transfer rate by axial spraying.

3. Device according to one of the preceding claims, **characterised in that** it comprises means for memorising (10) in order to memorise at least one metal transfer rate type that can be selected by the means for selecting (2) a metal transfer rate type.

4. Device according to one of the preceding claims, **characterised in that** said means for memorising (10) furthermore make it possible to memorise at least one first predetermined value (VfA) of wire speed and a second predetermined value (VfB) of wire speed, the first value (VfA) being less than the second value (VfB).

5. Device according to one of the preceding claims, **characterised in that** it further comprises means for comparing (20) the wire speed (Vf) with said first and second values of wire speed (VfA, VfB).

6. Device according to one of the preceding claims, **characterised in that** the means for selecting (2) the metal transfer rate type cooperating with the means for memorising (10) and for comparing (20) in such a way that the operator automatically selects at least:
- a first transfer rate type when (Vf) is less than or equal to the first predetermined value (VfA), and
- a second metal transfer rate type when (Vf) is greater than or equal to the second predetermined value (VfB).

7. Device according to one of the preceding claims, **characterised in that** the first metal transfer rate type is a transfer rate by forced short-circuit and the second metal transfer rate type is a transfer rate by axial spraying.

8. Device according to one of the preceding claims, **characterised in that** the means for memorising (10) cooperate with means for selecting (7) first and/or second predetermined values (VfA, VfB) in order to allow, after selection, an automatic memorising of the values of said first and second predetermined values (VfA, VfB).

9. Device according to claim 8, **characterised in that** the first and/or second predetermined values (VfA, VfB) are chosen in such a way that the difference between VfB and VfA corresponds to an increment step of the means for setting (1) the wire speed (Vf).

10. Method for arc welding with fusible metal wire of at least one metal part wherein a device is implemented according to one of the preceding claims.

11. Method as claimed in the preceding claim, **characterised in that** the metal fusible wire is electrically connected to a device for welding according to one of claims 1 to 9 and distributed to the metal part at a wire speed (Vf) and the fusion of the metal fusible wire and of at least one portion of the metal part to be welded is carried out by means of an electric arc established between the end of the fusible wire and the metal part to be welded in such a way as to generate, according to a given metal transfer rate, a metal transfer of the fusible wire to a welding bath, in which during the welding operation, a metal transfer rate type is automatically selected by setting the wire speed (Vf), said rate being selected from at least one transfer rate by forced short-circuit and a transfer rate by axial spraying.

12. Method according to one of claims 10 or 11, **characterised in that** a metal transfer rate type is automatically selected by setting the wire speed (Vf), said rate being a transfer rate by forced short-circuit when (Vf) is less than or equal to the first value (VfA) of the wire speed or a transfer rate by axial spraying when Vf is greater than or equal to the second value (VfB) of the wire speed.
